# EUROPEAN PATENT SPECIFICATION

(11) **EP 4 375 787 B1**
(45) Date of publication and mention of the grant of the patent: **24.09.2025**
(21) Application number: 22209275.1
(22) Date of filing: 24.11.2022
(51) Int. Cl.: G05D 23/19

(54) **METHOD FOR CONTROLLING A HYDRONIC HEATING SYSTEM, AND CONTROL SYSTEM FOR A HYDRONIC HEATING SYSTEM**
VERFAHREN ZUR STEUERUNG EINES HYDRONISCHEN HEIZSYSTEMS UND STEUERUNGSSYSTEM FÜR EIN HYDRONISCHES HEIZSYSTEM
PROCÉDÉ DE COMMANDE D'UN SYSTÈME DE CHAUFFAGE HYDRONIQUE ET SYSTÈME DE COMMANDE POUR UN SYSTÈME DE CHAUFFAGE HYDRONIQUE

(43) Date of publication of application: 29.05.2024
(73) Proprietor: Uponor Innovation AB, 73061 Virsbo (SE)
(72) Inventor: Butler, Brian, 28810 Madrid (ES); Jonsson, Ulf, 19492 Upplands Väsby (SE)
(74) Representative: Fenner, Seraina

(56) References cited:
- US-A- 5 024 265
- US-B1- 11 193 691
- US-B2- 10 465 920

## Description

The present invention relates to a method for controlling a hydronic heating system comprising a plurality of thermal zones, in particular an underfloor heating system for a plurality of rooms of a building. The present invention further relates to a control system for such a hydronic heating system.

Hydronic heating systems, i.e. heating systems wherein a liquid heating medium is provided to respective heat exchangers, and methods for their control are widely known. In an effort to reduce the energy consumption of heating systems, different types of hydronic underfloor and other panel heating systems have been developed. Therein, energy efficiency is improved, among others, by a relatively low supply temperature of the liquid heating medium as well as a relatively large area for transmitting the provided heat to the respective heating zone, such as a room of a building. Unlike conventional radiators with thermostatic valves, the valves used to control the flow of the liquid heating medium into such heating systems are often hidden in the floors or walls of the building. Accordingly, the control valves and corresponding room thermostats, including any associated user control elements, for each heating zone are usually provided separately from each other and are connected to a central controller of the hydronic heating system.

Over time, many different types of room thermostats and control valves have evolved, which operate, *inter alia,* at different voltage levels and exchange different control signals. This makes it difficult to effectively control a hydronic heating system comprising components from different vendors and/or product lines, for example in buildings where some of these components have been retrofitted. A relevant piece of prior art is US 10 465 920 B2.

Accordingly, it is a challenge of the present disclosure to provide a method for controlling a hydronic heating system and a corresponding heating system that can be used with a variety of components, and enables desirable features such as auto-balancing and/or self-learning.

According to a first aspect, a method according to claim 1 is provided.

Among others, the inventors have discovered that the various input signals provided by thermostats can be interpreted as heat calls either demanding further heating for a respective thermal zone or not. Moreover, they have discovered that, based on analysis of the timing with which such heat calls occur, a heating requirement for a respective room can be determined without explicit knowledge of a current set-point for the thermal zone. The determined heating requirement can be satisfied based on determined pulse width modulated (PWM) control signals. These in turn enable to control different types of actuators by simply activating or deactivating a flow of liquid heating medium into the respective thermal zones.

Compared with existing solutions, the described control method alleviates the need to retrieve additional information such as set-point values for each thermal zone. At the same time, it can be implemented using a number of different thermostat types, such as electronic on/off thermostats, bimetal or membrane electromechanical thermostats. Moreover, compared to proportional controllers, which control the opening degree of a respective valve of a heating loop, the use of PWM control signals allows the use of many different types of actuators, including simple shutoff valves. Since all input signals as well as output signals used by the disclosed control method are of a digital type, i.e. either on or off, it is relatively easy to convert respective signals to a desired voltage level, for example to include 12 V thermostats and 230 V thermostats in the same system.

The heat calls can be analysed in many ways to obtain the desired control behaviour. In its simplest form, the duty cycle of a respective PWM control signal is determined based on a proportion between a first duration of at least one heat call and a second duration of at least one interval between successive heat calls. For example, the output PWM control value could be adapted from a previous PWM control value based on such a proportion to optimize the control.

Further signal processing, such as statistical analysis and/or filtering may be used to improve the accuracy and response speed of the disclosed control method.

According to the invention, the method comprises storing timings of a plurality of heat calls and intervals between heat calls for each heating zone, computing an average heat call duration and an average interval between heat calls for each thermal zone, and determining a respective duty cycle for the respective thermal zone based on the average heat call duration and the average interval. Accordingly, an averaging of several heat calls can be achieved, thereby reducing the impact of untypically short or long heat calls. In at least one implementation, the method comprises detecting a pulsating mode of operation of a thermostat, in the case that a detected pulse lengths of a thermostat signal provided by the thermostat is shorter than a predetermined pulse mode timing threshold value, and/or detecting a non-pulsating or on/off mode of operation of a thermostat, in the case that the detected pulse lengths of the thermostat signal is longer than the predetermined pulse mode timing threshold value. The above detection steps enable the algorithm to distinguish between different types of thermostats with different switching behaviours.

In at least one implementation, the method may further comprise determining at least one of a pulse frequency, a pulse duration and/or an interval between multiple pulses of a digital thermostat signal of a thermostat detected to operate in the pulsating mode, and, based on the detected at least one of a pulse frequency, a pulse duration and/or an interval, generating a heat call signal for the respective thermostat, selective indicating a demand for heat in the respective thermal zone. This enables, among others, the integration of bimetallic or membrane thermostats, which provide an unsteady, pulsating control signal when they are operated close to a set-point temperature. The described algorithm detects such behaviour and translates it to a corresponding heat demand signal of a simple on/off thermostat, thereby facilitating use of a common control algorithm with different types of thermostats.

For example, a pulse frequency of multiple pulses of a pulsating thermostat signal may be determined. Only if the determined pulse frequency exceeds a predetermined frequency threshold, the corresponding digital thermostat signal may be considered to indicate a heat call. As another example, a length or average length of one or more pulses of a pulsating thermostat signal may be determined. Only if the determined pulse lengths exceeds a predetermined length threshold, the corresponding digital thermostat signal may be considered to indicate a heat call.

In at least one implementation, the method comprises initializing the duty cycle of the PWM control signal for each thermal zone with a predetermined value, in particular a duty cycle of 50%, increasing the duty cycle of the PWM control signal for a thermal zone in the case that a duration of at least one heat call of the respective thermal zone exceeds a first threshold value, and decreasing the duty cycle of the PWM control signal for thermal zone in the case that a duration of the at least one heat call of the respective thermal zone does not exceed a second threshold value. These steps effectively implement a self-learning behaviour, wherein initially it is assumed that a heating loop for each zone should be switched for a fixed proportion of the time. Then, over time, the switch-on period for each thermal zone may be slowly adapted upwards or downwards, until an equilibrium is reached. In other words, auto-balancing is achieved by modulating the energy flow to individual thermal zones to improve comfort and energy efficiency in multi-zone buildings. Thus, such a system alleviates the need for manual balancing and/or initial programming of a central controller.

In at least one implementation, the method comprises prolonging a flow of the liquid heating medium to a single thermal zone up to a predetermined duration, in the case that the flow of liquid heating medium to all other thermal zones has been deactivated. Among others, this prevents interruption of the liquid heating medium in the hydronic heating system for the predetermined duration, thereby preventing frequent starting and stopping of other components, such as a heat pump and/or a circulating pump.

In at least one implementation, the method comprises computing an average duration of heat calls for each thermal zone based on a predetermined number of heat calls, computing an average interval between successive heat calls for each thermal zone based on a predetermined number of intervals, and calculating a time base for each thermal zone based on the respective average duration and average interval. Such a room-specific time base computed over a number of heat calls can help to quickly determine suitable threshold values for adjusting the PWM control signal.

In at least one implementation, the duty cycle of the PWM control signal for a respective thermal zone is increased by a predetermined first part if the most recent heat call for a heating zone exceeds a first predetermined percentage of the time base. Alternatively, or in addition, the duty cycle of the PWM control signal for the respective thermal zone is decreased by a predetermined second part if the most recent heat call for a heating zone does not exceed a second predetermined percentage of the time base. Accordingly, an adjustment of the PWM control signal can be triggered at the end of every heat call, thereby achieving a relatively fast response time.

In at least one implementation, the duty cycle of the PWM control signal for the respective thermal zone is decreased by the second predetermined part only after detecting a predetermined number of, in particular two, successive heat calls for the respective thermal zone that fail to exceed the second predetermined percentage of the time base. Thereby, unnecessary corrections of the PWM control signal can be prevented in the downward direction, which are usually less time critical.

In at least one implementation, the duty cycle of the PWM control signal for a respective thermal zone is increased by a third predetermined part if an ongoing heat call for a heating zone exceeds a third predetermined percentage of the time base. In this embodiment, the response speed in the upward direction can be further reduced in that the algorithm does not need to wait for a current, very long heat call to end before adjusting the PWM control signal.

According to a second aspect of the disclosure, a control system for a hydronic heating system, in particular an underfloor heating system, is provided. The control system comprises:
- a plurality of thermostats, each thermostat installed in one of a plurality of thermal zones and configured to provide a digital thermostat signal, indicating a presence or absence of a heat call for the respective thermal zone;
- a plurality of actuators configured to open or close a flow of a liquid heating medium to a respective one of the plurality of thermal zone; and
- a controller configured to perform a method according to the first aspect or one of its implementations.

The disclosed control system enables to implement the control algorithm according to the first aspect in a system comprising a number of potentially different thermostats and actuators. The advantages of the claimed system essentially correspond to the respective advantages of the control method as detailed above.

In at least one implementation, each one of the actuators comprises at least one of a mechanical piston valve or a solenoid valve. Such valves can be controlled using the provided PWM control signals.

According to a third aspect, a computer program comprising instructions that, when executed by a controller, cause the controller to perform the method steps according to the control method of the first aspect.

Specific embodiments of the invention will be described with respect to the attached figures. These embodiments are merely provided to provide a better understanding of the invention, but are not intended to limit the invention.
Figure 1 shows a hydronic heating system for heating a plurality of rooms of a building.
Figure 2 shows a conceptual view of a controller of the hydronic heating system.
Figure 3 shows different processing stages of the controller according to Figure 2.
Figure 4 shows a flow diagram of a control loop for control of a hydronic heating system.
Figure 5 shows exemplary PWM control signals.
Figure 6 shows more detailed processing steps performed to update a PWM control signal for a single heating zone.
Figure 7 shows the behaviour of a bimetal thermostat in a pulsating and non-pulsating mode of operation.
Figure 8 shows more detailed processing steps performed to translate an oscillating thermostat input signal into a heat demand signal.

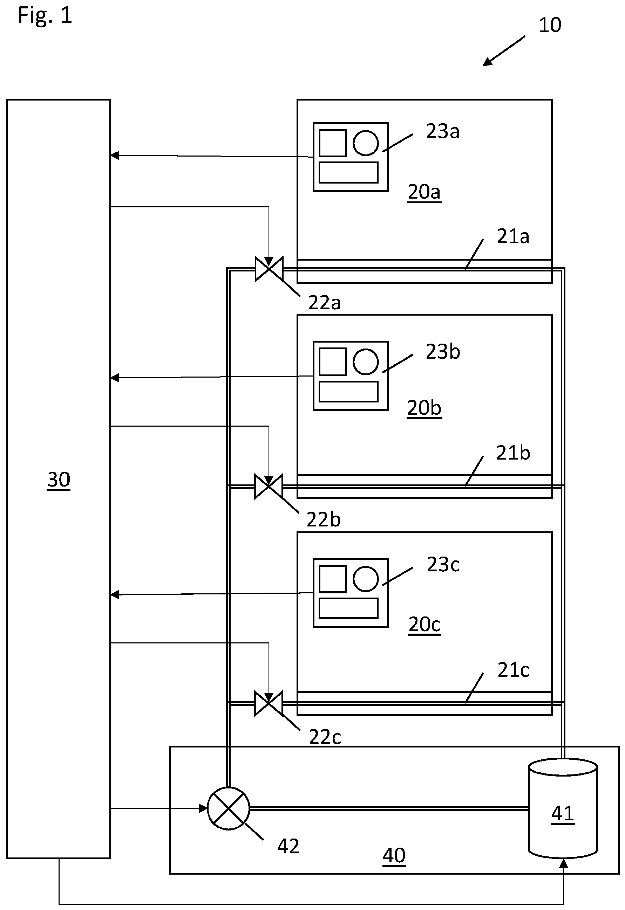

Figure 1 shows the general setup of a hydronic heating system 10. The hydronic heating system 10 comprises a number of thermal zones 20a to 20c, whose temperature can be controlled separately. For this purpose, a controller 30 regulates a flow of liquid heating medium from a heat supply system 40 to the individual thermal zones 20a to 20c.

As shown in Figure 1, the heat supply system 40 may comprise one or more heat sources 41, such as a heat pump or boiler, and one or more circulating means, such as a circulating pump 42. A liquid heating medium such as hot water is provided by the heat source 41 and circulated by the circulating pump 42 via supply lines towards the thermal zones 20a to 20c. Attention is drawn to the fact that, in the case of a heat pump being used as a heat source 41, an additional circulating pump 42 may not be necessary.

Each thermal zone 20a to 20c comprises one or more heating loops 21a to 21c, such as a network of pipes integrated into a floor of a respective room. Whether or not the liquid heating medium provided by the heat supply system 40 is circulated through the respective heating loop 21a to 21c is controlled by one or more actuators 22a to 22c. For example, a mechanical piston valve or solenoid valve may be used to selectively activate or deactivate a flow of the liquid heating medium. Each one of the actuators 22a to 22c is connected to the controller 30, which controls the provision of heating medium to all thermal zones 20a to 20c. Attention is drawn to the fact that it is sufficient for the described system if a respective flow of heating medium for one of the thermal zones 20a to 20c can be activated or deactivated. While it is also possible to use proportional valves as actuators 22a to 22c, in operation these may be controlled in the same way as a simple on/off valve, i.e. fully open or fully closed.

In order to judge the demand for heating medium for each of the thermal zones 20a to 20c, a thermostat 23a to 23c is installed in each one of the thermal zones 20a to 20c. The thermostats 23a to 23c may be room thermostats of different types and/or operating voltage. For example, conventional electromechanical bimetal thermostats may be used for the first thermal zone 20a. In the other thermal zones 20b and 20c, more modern, fully electronic thermostats may be employed. Each of the thermostats 23a to 23c provides a digital thermostat signal back to the controller 30, i.e. a signal with one of two possible signal levels. Due to the different nature of the respective thermostats 23a to 23c, the specific digital thermostat signals provided by them may differ, as detailed below. Nonetheless, the controller 30 unifies the received digital thermostat signal to either indicate a call or request for further heat or not, i.e. one of two possible states.

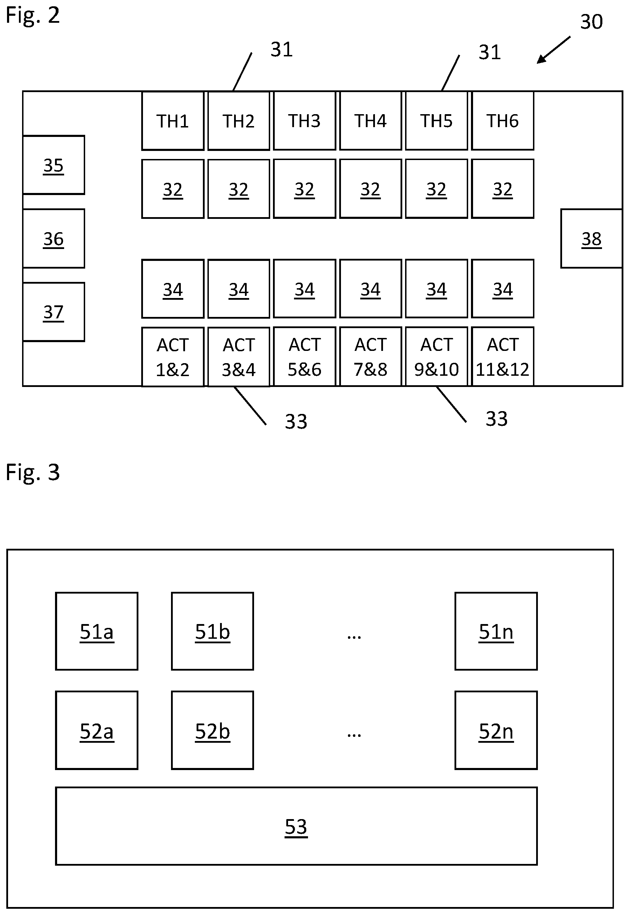

Figure 2 shows, in a schematic manner, the configuration of a controller 30. In the example shown, the controller 30 comprises a total of six control inputs 31 for receiving digital thermostat signals from six different thermal zones or thermostat channels. As shown in Figure 2, the controller 30 comprises corresponding input circuitry 32 for each control input 31, for example to connect a controller 30 to thermostats operating at different operating voltages, such as 12 V, 24 V and/or 230 V.

The controller 30 further comprises corresponding control outputs 33. In the specific example provided, the controller 30 comprises a total of twelve control outputs. Similar to the control inputs 31, each one of the control outputs 33 has corresponding output circuitry 34 which provide suitable control signals for actuators, such as different types of valves attached to the controller 30.

If desired, each thermal zone may be controlled by multiple control outputs 33 associated to the same thermostat channel. This is useful, in particular, for larger rooms having two separate heating loops arranged within the same thermal zone. In the embodiment shown in Figure 2, the mapping between the six control inputs 31 and the twelve control outputs 33 is fixed, i.e. each thermostat channel of the controller 30 corresponding to one of the thermal zones 20a to 20c of the building has one corresponding control input 31 and two corresponding control outputs 33. However, in other embodiments, this mapping may be different or more flexible, e.g. configurable through a user interface.

In addition, the controller 30 has a day and night input 35, a pump relay output 36 and a power supply input 37. Via the day and night input 35, different operating modes for normal or reduced heating can be activated. Further inputs may be provided (not shown), for example for monitoring condensation or for switching from a heating to a cooling mode of operation of a heat pump. The pump relay output 36 controls a heating source 41 and/or circulating pump 42 of the heat supply system 40. In case these components are separate from each other, multiple control outputs may be provided (not shown) by the controller 30. Finally, the controller 30 may comprise a number of user interface elements 38 for manual configuration of the controller 30. However, as the described control system is mostly self-learning, details of the user interface elements 38 will not be described here.

Figure 3 shows, in a schematic manner, various processing blocks performed by the controller 30. For this purpose, the controller 30 may comprise a micro-processor and a memory for storing program code of a control program executed by the micro-processor.

Conceptually, the controller 30 performs, in block 51a to 51b, pre-processing for each of the digital thermostat signals received for a respective thermal zone. Pre-processing may comprise, among others, the detection of the specific thermostat type attached to a respective control input 31, the mapping of the received raw thermostat signals to a corresponding heat call, and signal filtering. For example, very short ON periods of the digital thermostat signal, e.g. shorter than 90 seconds may be removed. Moreover, an average length of the ON and OFF periods of the digital thermostat signal and/or an average duration and interval between heat calls may be computed.

Thereafter, the pre-processed heat calls are used by respective blocks 52a to 52n for adjusting a corresponding PWM control signal for each one of the thermal zones 20. In particular, a duty cycle is determined for each thermal zone 22a to 22n, which reflects the average demand for heat during a predetermined time period. In general, the PWM control signal is later used to open or close a corresponding actuator 22a to 22n and thereby activate or deactivate a flow of liquid heating medium through corresponding heating loop 21a to 21n. Controlling the flow of liquid heating medium over time in turn allows to modulate the average amount of thermal energy provided to the respective heating zones 20a to 20c.

A central control block 53 monitors the output of the PWM adjustment blocks 52 and may adjust the PWM control signals and/or provides further control signals. Such signals may be used to perform some central control tasks, such as providing a signal to the pump relay output 36 for activating or deactivating parts of the heat supply system 40. The central control block 53 may also implement thermal loop bypass function, which keeps at least one of the actuators 22 switched on for a predetermined amount of time to avoid a frequent activation and deactivation of a heat source 41, circulating pump 42 and/or other central component.

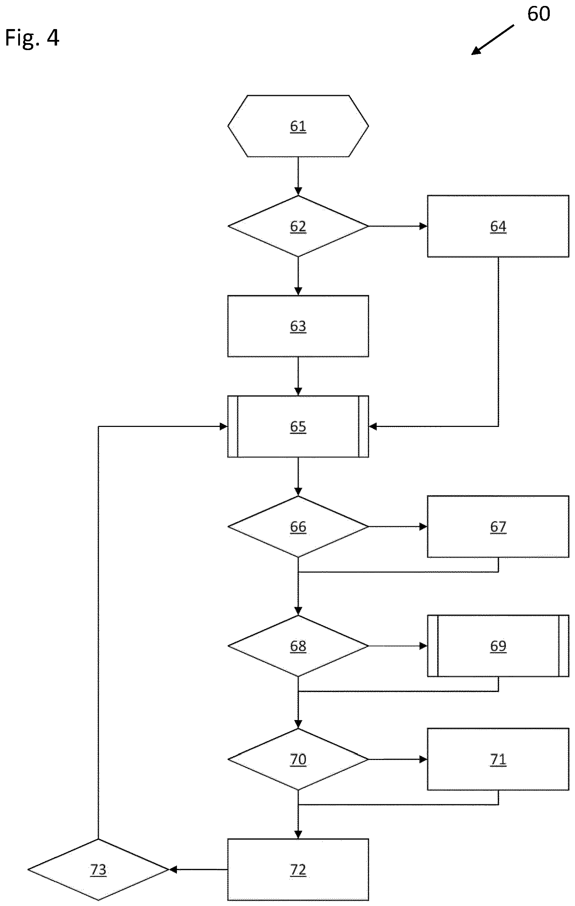

Figure 4 shows a possible implementation of the control method 60 in the form of a flowchart.

The method 60 starts at step 61, for example by switching on or otherwise providing power to the controller 30.

Immediately after the start, the controller 30 optionally checks whether it is starting for the first time in step 62.

If the controller 30 has never been started before and/or no saved configuration values are available for other reasons, it is initialized in a step 63. Initialization may comprise detection of how many thermostats 23 and/or actuators 22 are actually connected to the controller 30. Moreover, one or more parameters for each thermal zone 20 controlled by the controller 30 are initialized. For example, the duty cycle for a PWM control signal for each thermal zone may be set to a predetermined default value, such as 50%. Other initial parameters, such as a PWM modulation time, may also be determined and stored, for example in a non-volatile memory of the controller 30.

In the described example, the controller starts with a PWM modulation time of 30 minutes and an initial duty cycle of 50% for each thermal zone, corresponding to 15 minutes of heating and 15 minutes of no heating within each PWM modulation time. Moreover, an internal parameter referred to as time base is set to five times the PWM modulation time, i.e. 150 minutes, corresponding to a total of 75 minutes of heating and no heating for each thermal zone.

Alternatively, if the controller 30 has been started previously and is restarted, for example after a power failure or controlled deactivation, previously stored configuration data may be loaded in a step 64, for example from a non-volatile memory of the controller 30. That is to say, in step 64 the last used values for the above parameters for each thermal zone and the controller 30 are restored. This enables the controller 30 to continue working based on previously learned parameters and therefore speeds up initialisation of the controller 30.

After initialization, the thermostats and actuators associated with each one of the thermal zones 20 are managed within a control loop starting in step 65.

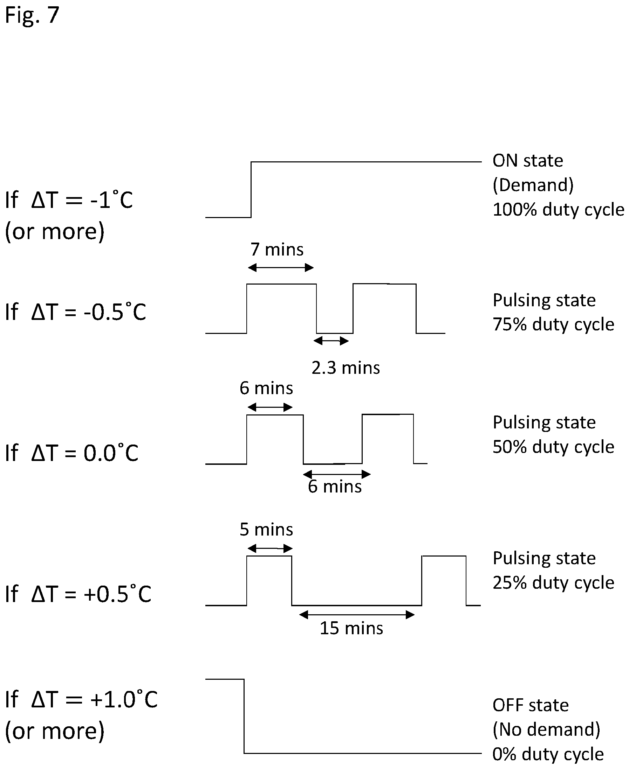

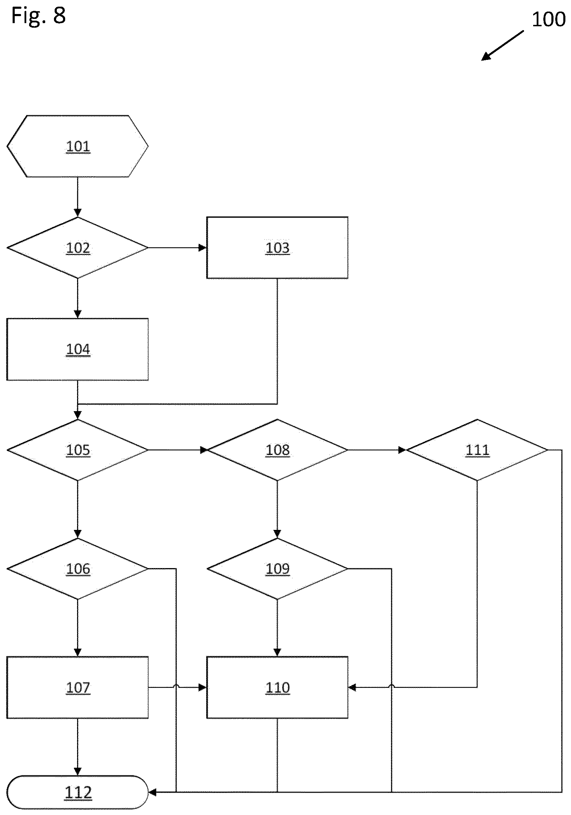

At step 65, samples of the digital thermostat signals are captured and used to determine if there is a current heat demand for a respective thermal zone 20a to 20c or not. In case of an electronic on/off thermostat, the received digital thermostat signal corresponds to a heat call used by the remainder of the control loop. For other thermostat types, such as bimetal thermostats or membrane thermostats, a conversion process may be used as detailed later with respect to Figures 7 and 8.

In general, the disclosed system may operate with an auto-balancing feature activated or deactivated. This setting may be stored persistently as described above, or may be indicated by a jumper or other type of hardware or software switch.

If the auto-balancing feature is deactivated, the digital thermostat signals provided by the respective room thermostats 23a to 23c or corresponding heat calls are provided directly to the respective actuators 21a, to 21c, respectively. That is to say, if a room thermostat indicates a demand for heat for a room, a flow of liquid heating medium through a corresponding heating loop will be activated. Inversely, if the room thermostat does not indicate a demand for heat, the flow will be deactivated.

However, if the auto-balancing feature is activated, the method 60 analyses multiple heat calls provided by each one of the thermostats 23 over a longer time period to determine the average heat demand for each thermal zone 20a to 20c. Some input filtering may be performed at this stage to suppress short heat calls and to apply a hysteresis for each of the thermostats 23, for example, as further detailed with respect to steps 66 to 72 below. Accordingly, such a heat call may also be referred to as "calculated auto-balancing heat call". This parameter represents a calculated or filtered interpretation of the thermostat state derived from a corresponding digital thermostat signal.

In the example implementation, in a step 66, the controller 30 at first checks whether a heat call for a respective thermal zone has been switched to an ON state.

If the start of such an ON state is detected in step 66, the length of the previous interval, i.e. the duration between successive heat calls for a given thermal zone, is calculated and saved in an array of the last five heat call intervals in step 67. Very short intervals, e.g. intervals of less than 90 seconds, may be omitted in step 67. Once the latest interval time has been stored, a new average interval time between heat calls may be computed based on the array's content.

Correspondingly, in step 68, the controller 30 checks whether a heat call has switched to an OFF state for one of the thermal zones. Accordingly, in a step 69, an array comprising the duration of the last five heat calls for the respective thermal zone is updated. As detailed above with regard to step 67, some filtering and averaging of the recorded ON times may be performed.

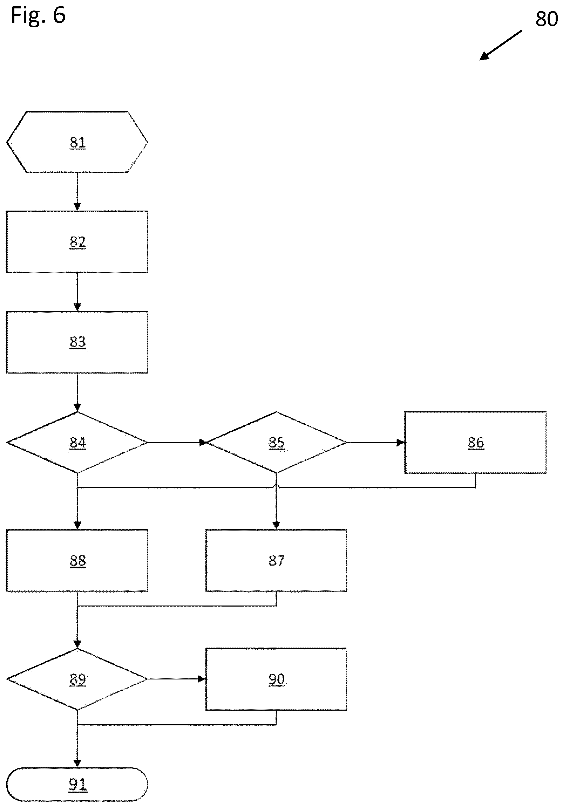

Moreover, in the specific embodiment, this occasion is used to update the respective PWM control signal for the respective thermal zone 20. This process will be described later with respect to Figure 6.

In step 70, a so-called continuous heat call may be detected. This means that a thermostat's request for heating for a corresponding thermal zone does not come to an end within an expected timeframe. This takes care of the case of a heating loop being significantly underpowered and therefor unable to reach the room's set-point in the PWM modulation interval.

If such a situation is detected, in step 71, the duty cycle of the PWM control signal is increased even before the end of a heat call is detected in step 68. In the specific implementation, the duty cycle is increased by a fixed percentage, e.g. 6.6%, if the length of a currently running ON state of the digital demand signal exceeds a predefined threshold, e.g. 80% of the time base for the respective thermal zone 20.

In a step 72, the control outputs 33 for each thermostat channel of the controller 30 are activated or deactivated. This process uses the status and timing of the respective heat calls, a common timer and respective computed PWM control signals to decide if the respective control output 33 should be ON or OFF. Moreover, it uses a separate timer to handle a thermal loop bypass (TLBP) function to extend the time during which the last active output remains switched ON under the condition that the output 33 associated with the respective thermal zone 20 is the only one left that is active.

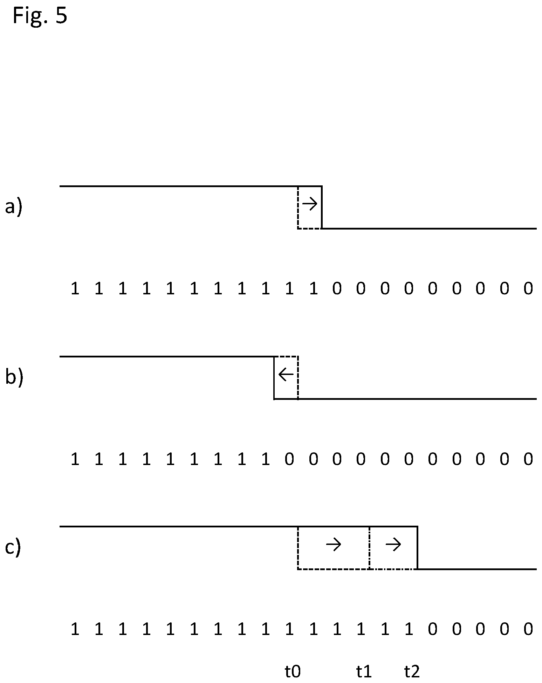

Figure 5 shows three exemplary PWM control signals computed for three respective thermal zones 20a to 20c by the method 60 described above. The duty cycle for each signal corresponds to the relative length of activating the respective zones 20a to 20c within the PWM modulation time, e.g. each 30 minute interval of the described system.

As shown in Figure 5 a), the duty cycle of the first PWM control signal has been slightly extended from an initial duty cycle of 50% (dashed) corresponding to time t0 to a duty cycle of, for example, 56.6% (solid). Inversely, the PWM control signal for the second thermal zone 20b according to Figure 5 b) has been reduced from the initial PWM duty cycle of 50% to a reduced PWM duty cycle of, for example, 43.4%.

The PWM control signal for the third thermal zone 20c has been extended to a much larger duty cycle of, for example, 69.8%. Accordingly, at time t1, at which the supply of the liquid heating medium should be deactivated for the thermal zone 20c, the third heating loop 21c is the last active heating loop. However, in order to implement a TLBP function as indicated above, the controller 30 compares the current time t1 with a pre-set minimum TLBP time for the heat supply system 40. If the minimum TLBP time has not been reached at moment t1, the controller 30 will essentially extend the PWM control signal for the last remaining heating loop 21c to time t2, at which the minimum TLBP time has expired. In the specific example, this may represent 80% of the PWM modulation time. Alternatively, a fixed operation time for the last active heating loop, such as 30 or 45 minutes, may be configured as minimum TLBP time. Moreover, the minimum TLBP time can be configured in an adaptive manner by using a part of the stored time values for historical heat call lengths.

In a step 73, the controller 30 checks whether a predetermined time has elapsed to start the next iteration of the control loop at step 65. The length of this so-called timer tick may be configured manually or may be predetermined. Due to the relatively slow nature of control signals involved in hydronic heating systems, a timer tick may correspond to 1 or 10 seconds or more, such as a minute.

Figure 6 shows a more detailed flow chart of an exemplary process 80 for updating the respective PWM control signal and internal control variables used for auto-balancing the thermal zones 20a to 20c in more detail.

The process 80 starts at step 81. In the described implementation, this process is triggered in step 67, i.e. whenever the end of a heat call is detected. However, in other implementations the PWM control signals may also be updated at the start of a heat call or at regular intervals.

In step 82 the length of the most recent heat call is stored in an array of the last five heat call durations.
Moreover, particularly short heat calls may be filtered out. In other words, such particularly short heat calls may not be stored in the array. Thereafter, the average length of the last five heat call durations is computed.

In step 83, based on the last five stored heat calls and intervals there between, a new time base is calculated for the respective thermal zone. As detailed above, in the specific implementation, the time base corresponds to the duration of the last five intervals and the last five heat halls and starts with a value of 150 minutes. However, if the sum of the last five stored intervals and heat call durations is shorter or longer, this parameter is adjusted accordingly to reflect the response time of the respective thermal zone. Among others, this self-adaption makes the system suitable for different installation types of the heating loops, for example heating loops directly embedded in a concrete floor slab or in a heating panel arranged above a floor insulation covering a concrete floor.

Attention is drawn to the fact that the time base, and at least in some configurations, the duration of individual heat calls, is typically much longer than the PWM modulation time. That is to say, during a single heat call received from one of the thermostats 23a to 23c a corresponding heating loop 21a to 21c of the same thermal zone 20a to 20c may be activated and deactivated repeatedly to provide a required average energy flow into the respective thermal zone 20a to 20c.

In the described implementation, the time base computed for each thermal zone is limited to a predetermined range, for example to a range between 30 and 500 minutes. Among others, this reduce a risk of flow starvation for longer heating loops when set-points are set unreasonable high on thermal zones with shorter heating loops.

In step 84, the length of the latest heat call is compared to a lower threshold to determine if it represents a so called short heat call. In the specific example, the lower threshold corresponds to 30% of the time base computed in step 83.

If the last heat call is considered to be a short heat call, the method continues in step 85 to verify whether the currently processed heat call was the first or a subsequent heat call that did not exceed the lower threshold.

In the case that a short heat call has been received a predetermined number of times in succession, for example twice, in step 86, the duty cycle of the corresponding PWM control signal is adjusted downwards by a predetermined amount. For example, in the specific embodiment, it is adjusted downwards by 6.6% of the current value. The size of the downwards adjustment may be specified as a percentage or an absolute value. The downward adjustment may be limited to a predefined minimum value, such as a duty cycle of 5%. The step size and minimum value may be fixed or user configurable and stored in a non-volatile memory of the controller 30.

If it is determined in step 85 that the predetermined number of repetitions has not been reached, e.g. if the currently processed heat call is the first short heat call, the method proceeds to step 87 to set or update a corresponding event counter. This information will be used in a subsequent iteration of the loop in the case that another short heat call is detected in the next iteration of steps 84 and 85. In the specific implementation, the number of successive short heat calls is stored in a corresponding counter. However, alternatively, a single flag may be sufficient in the case that a sequence of only two short heat calls is sufficient to trigger adjustment of the PWM control signal in step 86.

If the length of the heat call exceeds the lower threshold, i.e. if the heat call is not considered short, the method proceeds directly from step 84 to step 88, wherein the corresponding event counter or flag is reset to mark an end of successive short heat calls.

In a step 89, the duration of the last heat call is compared with an upper threshold. In the specific example, the upper threshold corresponds to 80% of the time base computed in step 83. If the heat call exceeds the upper threshold, the duty cycle of the corresponding PWM control signal will be adjusted upwards immediately, i.e. already on occurrence of the first long heat call. As described above, it may be increased by a fixed percentage, e.g. 6.6%, or a fixed absolute value. Moreover, the duty cycle may be limited to a maximum value, such as 85%.

Attention is drawn to the fact that, in the described implementation, the upwards correction of the PWM control signal in step 90 is performed quicker, i.e. on detection of any long heat call, as compared to the downward adjustment performed in step 86, which is only performed on a successive, e.g. second, short heat call to implement a desired hysteresis. This is due to the fact that the controller 30 should react quicker to an underpowered heating loop rather than an overpowered heating loop. Among others, this results in a better response time if a user increases a set point temperature and expects the heating system to respond quickly. However, of course it is also possible to implement no or the same delay in each direction.

In step 91, the PWM adjustment routine ends and the method continues as described above in step 70.

Any values updated during the method 60 of Figure 4 and/or the process 80 of Figure 6 may be stored immediately in a non-volatile memory. For example, the updated PWM control signal may be stored after downwards adjustment in step 86 or upwards adjustment in step 90 and the time base may be stored at the end of step 83. Alternatively, these values may be kept in volatile memory and stored only at regular intervals, for example every few hours, or at a user's request.

The above method 60 and process 80 work with many thermostat types providing a stable on/off output signal, such as more recent electronic room thermostats. As detailed above, in this case the output signal of the thermostat directly corresponds to the heat calls used in the above algorithm.

In the case of thermostats providing a less stable output signal, such as electromechanical, bimetal or membrane thermostats, some signal pre-processing may be required to translate their output signals into heat calls, as detailed below. The below signal pre-processing method may also be useful in other control methods based on the detection and/or timing of heat calls.

Figure 7 shows different digital thermostat signals, which may be provided by one of the thermostats 23a to 23c of the hydronic heating system 10.

In particular, the upmost part of Figure 7 shows a digital thermostat signal corresponding to an ongoing heat call when a set-point temperature exceeds the current room temperature by a fixed threshold, such as 1°C. Such a constant thermostat ON state or heat call looks similar, both for bimetal thermostats and electronic on/off thermostats. Correspondingly, if the current room temperature exceeds the set-point temperature by at least 1°C, a constant OFF signal indicating no demand for heating is provided, as shown in bottommost part of Figure 7. In mathematical terms, the heat call or ON state corresponds to a thermostat signal with a duty cycle of 100% and the no heat call or OFF state corresponds to a thermostat signal with a duty cycle of 0%.

An electronic on/off thermostat will only provide one of these two signals. However, some other type of thermostats, such as bimetal or membrane electromechanical thermostats, may also enter a so-called pulsating or oscillating state, wherein a sequence of relatively short pulses is provided to indicate an operation close to the set-point temperature. The pulsating part normally only covers a small temperature range, for example within one degree centigrade on either side of the set-point.

As shown in the middle part of Figure 7, the thermostat output signal may oscillate and take the form of a PWM signal close to the set-point temperature. For example, if the room temperature essentially corresponds to the set-point temperature, the thermostat signal may oscillate between an ON and OFF state having essentially the same length of, for example 6 minutes each, corresponding to a duty cycle of 50%. At a room temperature slightly below the set-point temperature, e.g. ΔT = -0.5°C, the ON pulse duration will increase, e.g. to 7 minutes, and the intervals between ON pulses will decrease, e.g. to 2.3 minutes, corresponding to a duty cycle of 75%. At a room temperature slightly above the set-point temperature, e.g. ΔT = 0.5°C, the ON pulse duration will decrease, e.g. to 5 minutes, and the intervals between ON pulses will be increase, e.g. to about 15 minutes, corresponding to a duty cycle of 25%.

Attention is drawn to the fact that the above values and signals times are of exemplary nature only. The exact switching points will be depending on the pulsation characteristics of the respect thermostat. However, the below method ensures that corresponding heat calls will be detected within the pulsating range, and that the hysteresis then will be lower than that of the full pulsating temperature range.

The disclosed control system can deal with thermostats of different types in essentially the same way. In the described system, the pulsating states of the digital thermostat signals as shown in the middle part of Figure 7 are translated by the controller 30 into corresponding heat calls and intervals there between. The implementation uses a 15-minute window and some filtering of the pulses of the thermostat signals to decide when a heat call is active, and avoid false interpretation of a standard ON/OFF thermostat signal.

In the described system, a pulsating mode of operation of the thermostat 23a is detected. In a specific implementation, the pulsating mode is detected if the average ON pulse duration of the thermostat signal is shorter than a first switching threshold, e.g. 10 minutes. Otherwise, a standard on/off mode of operation is considered. This may be determined, for example, by analysing the input thermostat signal for each control input 31 over a floating 15 minutes long sampling window.

A flow chart of a corresponding process 100 is shown in Figure 8.

The process 100 starts at step 101 and is performed for each thermostat channel connected to a thermostat providing an oscillating output signal. As described above, the process 100 may be triggered at step 65 of method 60.

In step 102, the controller 30 checks whether the corresponding thermostat signal is active, i.e. in an ON state. If this is the case, a variable representing a filter value for the respective control input 31 is increased by 1 in step 103. Otherwise, the variable representing the filter value is decreased by 1 in step 104.

In step 105, the controller 30 checks whether a state variable representative of a heat demand signal for the corresponding thermostat is active, i.e. in the ON state.

If the heat demand signal is found to be currently OFF in step 105, in step 106, the controller 30 checks whether the current filter value exceeds a predefined PULSED ON threshold value indicating a relatively long ON pulse of the pulsating thermostat signal. If this is not the case, the process 100 proceeds to step 112.

If the current filter value exceeds the predefined PULSED ON threshold value, in step 107, the heat demand state variable is set to ON to indicate a demand for more heat for the respective thermal zone. Moreover an offset value may be added to the filter value to create a desired hysteresis. Thereafter, the process 100 proceeds to step 112.

Alternatively, if the heat demand signal is found to be currently ON in step 105, in step 108, the controller 30 checks whether the current filter value exceeds a predefined ON/OFF threshold value.

If the current filter value exceeds the ON/OFF threshold value in step 108, in step 109, the controller 30 checks whether the current input thermostat signal is inactive, i.e. is in an OFF state. If the thermostat signal is active, the process 100 proceeds to step 112.

Otherwise, if the current thermostat signal is inactive in step 109, in step 110, the state variable for the heat call signal is toggled from ON to OFF to indicate no further demand for heat for the respective thermal zone. Moreover, the respective input filter value is cleared, i.e. set to zero. Thereafter, the process 100 proceeds to step 112.

If the current filter value does not exceed the ON/OFF threshold value in step 108, in step 111, the controller 30 further checks whether the current filter value is below a predefined PULSED OFF threshold value. If this is the case, the method directly proceeds to step 110 to reset the heat call state variable and input filter value. Otherwise, the process 100 proceeds to step 112.

After updating the heat call state variable in steps 107 or 110 or if the results of the checks in steps 106, 109 or 111 are negative, the method ends by returning the current, potentially updated state value for the heat call.

The disclosed devices, systems and methods result in a number of advantages over known control methods and systems. In particular, they enable input signals provided by thermostats of different types to be combined by a single control algorithm. Similarly, a variety of different types of actuators may be controlled. At the same time, the described algorithm is essentially self-learning and enables auto-balancing of a hydronic heating system without any expert knowledge or manual configuration by a system engineer.

The disclosed system and control methods have been described in detail with respect to a specific implementation. However, the disclosed invention shall not be limited to the described embodiments, and may be modified in multiple ways. For example, while the invention has been described with respect to an underfloor heating system, a corresponding approach may be applied in a hydronic cooling system, or a combined hydronic heating and cooling system.

### List of references

- 10: hydronic heating system
- 20a - 20c: thermal zone
- 21a - 21c: heating loop
- 22a - 22c: actuator
- 23a - 23c: thermostat
- 30: controller
- 31: control input
- 32: input circuit
- 33: control output
- 34: output circuit
- 35: day/night input
- 36: pump relay output
- 37: power supply input
- 38: user interface elements
- 40: heat supply system
- 41: heat source
- 42: circulating pump
- 51a - 51n: pre-processing block
- 52a - 52n: PWM adjustment block
- 53: central control block
- 60: method
- 61-74: method steps
- 80, 100: process
- 81 - 91: process steps
- 101 - 112: process steps

## Claims

1. A method for controlling a hydronic heating system (10) comprising a plurality of thermal zones (20a-20c), in particular an underfloor heating system for a plurality of rooms of a building, the method comprising:
- monitoring a plurality of digital thermostat signals to obtain a timing of heat calls indicating a demand for heating in a corresponding thermal zone (20a-20c);
- determining respective duty cycles for a pulse width modulated, PWM, control signal for each one of the plurality of thermal zones (20a-20c) based on the obtained timing of heat calls; and
- controlling a temperature of each thermal zone by activating or deactivating a flow of liquid heating medium into each one of the respective thermal zones (20a-20c) based on the determined duty cycle of the respective PWM control signal; the method being **characterised by**
- storing timings of a plurality of heat calls and intervals between heat calls for each thermal zone (20a-20c);
- computing an average heat call duration and an average interval between heat calls for each thermal zone (20a-20c); and
- determining the respective duty cycle for the respective thermal zone (20a-20c) based on the average heat call duration and the average interval.

2. The method of claim 1, wherein the duty cycle of the respective PWM control signal is determined based on a proportion between a first duration of at least one heat call and a second duration of at least one interval between successive heat calls.

3. The method of claim 2, wherein the average heat call duration and the average interval is computed based on a prefiltered subset of the timings of the plurality of heat calls and intervals, excluding at least one of a longest and/or a shortest one of the heat calls and/or intervals.

4. The method of any one of claims 1 to 3, comprising:
- detecting a pulsating mode of operation of a thermostat, in the case that a detected pulse lengths of a thermostat signal provided by the thermostat is shorter than a predetermined pulse mode timing threshold value; and/or
- detecting a non-pulsating or on/off mode of operation of a thermostat, in the case that the detected pulse lengths of the thermostat signal is longer than the predetermined pulse mode timing threshold value.

5. The method of claim 4, further comprising:
- determining at least one of a pulse frequency, a pulse duration and/or an interval between multiple pulses of a digital thermostat signal of a thermostat detected to operate in the pulsating mode; and
- based on the detected at least one of a pulse frequency, a pulse duration and/or an interval, generating a heat call signal for the respective thermostat, selective indicating a demand for heat in the respective thermal zone.

6. The method of any one of claims 1 to 5, comprising:
- initializing the duty cycle of the PWM control signal for each thermal zone (20a-20c) with a predetermined value, in particular a duty cycle of 50%;
- increasing the duty cycle of the PWM control signal for a thermal zone (20a-20c) in the case that a duration of at least one heat call of the respective thermal zone (20a-20c) exceeds a first threshold value; and
- decreasing the duty cycle of the PWM control signal for a thermal zone (20a-20c) in the case that a duration of the at least one heat call of the respective thermal zone (20a-20c) does not exceed a second threshold value.

7. The method of any one of claims 1 to 6, comprising:
- prolonging a flow of the liquid heating medium to a single thermal zone (20c) up to a predetermined duration, in the case that the flow of liquid heating medium to all other thermal zones (20a, 20b) has been deactivated.

8. The method of any one of claims 1 to 7, comprising:
- computing an average duration of heat calls for each thermal zone (20a-20c) based on a predetermined number of heat calls;
- computing an average interval between successive heat calls for each thermal zone (20a-20c) based on a predetermined number of intervals; and
- calculating a time base for each thermal zone (20a-20c) based on the respective average duration and average interval.

9. The method of claim 8, comprising:
- increasing the duty cycle of the PWM control signal for the respective thermal zone (20a-20c) by a predetermined first part if the most recent heat call for a heating zone (20a-20c) exceeds a first predetermined percentage of the time base; and/or
- decreasing the duty cycle of the PWM control signal for the respective thermal zone (20a-20c) by a predetermined second part if the most recent heat call for a heating zone (20a-20c) fails to exceed a second predetermined percentage of the time base.

10. The method of claim 9, wherein the duty cycle of the PWM control signal for the respective thermal zone (20a-20c) is decreased by the second predetermined part only after detecting a predetermined number of, in particular two, successive heat calls for the respective thermal zone (20a-20c) that fail to exceed the second predetermined percentage of the time base.

11. The method of any one of claims 9 or 10, comprising:
- increasing the duty cycle of the PWM control signal for the respective thermal zone by a third predetermined part if an ongoing heat call for a heating zone exceeds a third predetermined percentage of the time base.

12. A control system for a hydronic heating system (10), in particular an underfloor heating system, comprising:
- a plurality of thermostats (23a-23c), each thermostat installed in one of a plurality of thermal zones (20a-20c) and configured to provide a digital thermostat signal, indicating a presence or absence of a heat call for the respective thermal zone (20a-20c);
- a plurality of actuators (22a-22c) configured to open or close a flow of a liquid heating medium to a respective one of the plurality of thermal zones (20a-20c); and
- a controller (30) configured to perform a method according to any one of claims 1 to 12.

13. The control system of claim 12, wherein:
- each thermostat (23a-23c) comprises a temperature sensor for sensing a temperature of the respective thermal zone (20a-20c) and a control element for providing a set-point associated with the respective thermal zone (20a-20c);
- each thermostat is configured to provide its digital thermostat signal based on the sensed temperature and provided set-point; and
- the controller (30) is configured to determine the duty cycle of the PWM control signal for each of the plurality of thermal zones without querying the respective thermostat (23a-23c) for the current temperature or the current set-point of the respective thermal zone (20a-20c).

14. The control system of claim 12 or 13, wherein the plurality of thermostats (23a-23c) comprises:
- at least one first thermostat providing a digital thermostat signal of a first voltage and least one second thermostat providing a digital thermostat signal of a second voltage, the second voltage being higher than the first voltage; and/or
- at least one bimetal or membrane thermostat (23a) and at least one on/off-thermostat (23b, 23c), wherein the least one bimetal or membrane thermostat (23a) selectively operates in a pulsating mode or a non-pulsating mode, and the least one on/off-thermostat (23b, 23c) operates in the non-pulsating mode only.

## Patentansprüche

1. Verfahren zur Steuerung eines hydronischen Heizsystems (10), das mehrere thermische Zonen (20a-20c) umfasst, insbesondere ein Unterbodenheizsystem für mehrere Räume eines Gebäudes, wobei das Verfahren Folgendes umfasst:
- Überwachen mehrerer digitaler Thermostatsignale zum Erhalten einer zeitlichen Abfolge von Heizaufrufen, einen Bedarf von Heizung in einer entsprechenden thermischen Zone (20a-20c) anzeigend;
- Bestimmen entsprechender Tastverhältnisse für ein pulsbreitenmoduliertes bzw. PWM-Steuersignal für jede der mehreren thermischen Zonen (20a-20c) basierend auf der erhaltenen zeitlichen Abfolge von Heizaufrufen; und
- Steuern einer Temperatur jeder thermischen Zone durch Aktivieren oder Deaktivieren eines Stroms von flüssigem Heizmedium in jede der entsprechenden thermischen Zonen (20a-20c) basierend auf dem bestimmten Tastverhältnis des entsprechenden PWM-Steuersignals; wobei das Verfahren **gekennzeichnet ist durch**
- Speichern von zeitlichen Abläufen von mehreren Heizaufrufen und Intervallen zwischen Heizaufrufen für jede mehreren thermischen Zonen (20a-20c);
- Berechnen einer durchschnittlichen Heizaufrufdauer und eines durchschnittlichen Intervalls zwischen Heizaufrufen für jede thermische Zone (20a-20c); und
- Bestimmen des entsprechenden Tastverhältnisses für die entsprechende thermische Zone (20a-20c) basierend auf der durchschnittlichen Heizaufrufdauer und dem durchschnittlichen Intervall.

2. Verfahren nach Anspruch 1, wobei das Tastverhältnis des entsprechenden PWM-Steuersignals basierend auf einem Verhältnis zwischen einer ersten Dauer zumindest eines Heizaufrufs und einer zweiten Dauer zumindest eines Intervalls zwischen aufeinander folgenden Heizaufrufen bestimmt wird.

3. Verfahren nach Anspruch 2, wobei die durchschnittliche Heizaufrufdauer und das durchschnittliche Intervall basierend auf einer vorgefilterten Teilmenge der zeitlichen Abfolgen der mehreren Heizaufrufe und Intervalle, ausgenommen zumindest eines aus einem längsten und/oder kürzesten der Heizaufrufe und/oder Intervalle, berechnet wird.

4. Verfahren nach einem der Ansprüche 1 bis 3, das Folgendes umfasst:
- Detektieren eines pulsierenden Betriebsmodus eines Thermostats in dem Fall, dass eine detektierte Pulslänge eines Thermostatsignals, das durch das Thermostat bereitgestellt wird, kürzer als ein vorbestimmter Pulsmodus-Zeitschwellwert ist; und/oder
- Detektieren eines nicht-pulsierenden oder Ein/Aus-Betriebsmodus eines Thermostats in dem Fall, dass die detektierte Pulslänge des Thermostatsignals länger als der vorbestimmte Pulsmodus-Zeitschwellwert ist.

5. Verfahren nach Anspruch 4, das ferner Folgendes umfasst:
- Bestimmen zumindest eines aus einer Pulsfrequenz, einer Pulsdauer und/oder einem Intervall zwischen mehreren Pulsen eines digitalen Thermostatsignals eines Thermostats, bei dem detektiert wurde, dass es im pulsierenden Modus arbeitet; und
- basierend auf dem detektierten zumindest einen aus einer Pulsfrequenz, einer Pulsdauer und/oder einem Intervall, Erzeugen eines Heizaufrufsignals für das entsprechende Thermostat, gezieltes Anzeigen eines Heizbedarfs in der entsprechenden thermischen Zone.

6. Verfahren nach einem der Ansprüche 1 bis 5, das Folgendes umfasst:
- Initialisieren des Tastverhältnisses des PWM-Steuersignals für jede thermische Zone (20a-20c) mit einem vorbestimmten Wert, insbesondere einem Tastverhältnis von 50 %;
- Erhöhen des Tastverhältnisses des PWM-Steuersignals für eine thermische Zone (20a-20c), falls eine Dauer zumindest eines Heizaufrufs der entsprechenden thermischen Zone (20a-20c) einen ersten Schwellwert überschreitet; und
- Verringern des Tastverhältnisses des PWM-Steuersignals für eine thermische Zone (20a-20c), falls eine Dauer des zumindest einen Heizaufrufs der entsprechenden thermischen Zone (20a-20c) einen zweiten Schwellwert nicht überschreitet.

7. Verfahren nach einem der Ansprüche 1 bis 6, das Folgendes umfasst:
- Verlängern eines Stroms des flüssigen Heizmediums zu einer einzelnen thermischen Zone (20c) bis zu einer vorbestimmten Dauer in dem Fall, dass der Strom von flüssigem Heizmedium zu allen anderen thermischen Zonen (20a, 20b) deaktiviert wurde.

8. Verfahren nach einem der Ansprüche 1 bis 7, das Folgendes umfasst:
- Berechnen einer durchschnittlichen Dauer von Heizaufrufen für jede thermische Zone (20a-20c) basierend auf einer vorbestimmten Anzahl von Heizaufrufen;
- Berechnen eines durchschnittlichen Intervalls zwischen aufeinander folgenden Heizaufrufen für jede thermische Zone (20a-20c) basierend auf einer vorbestimmten Anzahl von Intervallen; und
- Berechnen einer Zeitbasis für jede thermische Zone (20a-20c) basierend auf der entsprechenden durchschnittlichen Dauer und dem durchschnittlichen Intervall.

9. Verfahren nach Anspruch 8, das Folgendes umfasst:
- Erhöhen des Tastverhältnisses des PWM-Steuersignals für die entsprechende thermische Zone (20a-20c) um einen vorbestimmten ersten Teil, wenn der jüngste Heizaufruf für eine Heizzone (20a-20c) einen ersten vorbestimmten prozentualen Anteil der Zeitbasis überschreitet; und/oder
- Verringern des Tastverhältnisses des PWM-Steuersignals für die entsprechende thermische Zone (20a-20c) um einen vorbestimmten zweiten Teil, wenn der jüngste Heizaufruf für eine Heizzone (20a-20c) einen zweiten vorbestimmten prozentualen Anteil der Zeitbasis nicht überschreitet.

10. Verfahren nach Anspruch 9, wobei das Tastverhältnis des PWM-Steuersignals für die entsprechende thermische Zone (20a-20c) um den zweiten vorbestimmten Teil erst verringert wird, nachdem eine vorbestimmte Anzahl von, insbesondere zwei, aufeinander folgenden Heizaufrufen für die entsprechende thermische Zone (20a-20c) detektiert wurde, die den zweiten vorbestimmten prozentualen Anteil der Zeitbasis nicht überschreiten.

11. Verfahren nach einem der Ansprüche 9 oder 10, das Folgendes umfasst:
- Erhöhen des Tastverhältnisses des PWM-Steuersignals für eine entsprechende thermische Zone um einen dritten vorbestimmten Teil, wenn ein laufender Heizaufruf für eine Heizzone einen dritten vorbestimmten prozentualen Anteil der Zeitbasis überschreitet.

12. Steuerungssystem für ein hydronisches Heizsystem (10), insbesondere ein Unterbodenheizsystem, das Folgendes umfasst:
- mehrere Thermostate (23a-23c), wobei jedes Thermostat in einer von mehreren thermischen Zonen (20a-20c) installiert ist und ausgelegt ist zum Bereitstellen eines digitalen Thermostatsignals, das eine Anwesenheit oder Abwesenheit eines Heizaufrufs für die entsprechende thermische Zone (20a-20c) anzeigt;
- mehrere Aktuatoren (22a-22c), dazu ausgelegt, einen Strom eines flüssigen Heizmediums zu einer entsprechenden der mehreren thermischen Zonen (20a-20c) zu öffnen oder zu schließen; und
- eine Steuerung (30), ausgelegt zum Durchführen eines Verfahrens nach einem der Ansprüche 1 bis 12.

13. Steuerungssystem nach Anspruch 12, wobei:
- jedes Thermostat (23a-23c) einen Temperatursensor zum Erfassen einer Temperatur der entsprechenden thermischen Zone (20a-20c) und ein Steuerelement zum Bereitstellen eines Einstellpunkts in Verbindung mit der entsprechenden thermischen Zone (20a-20c) umfasst;
- jedes Thermostat ausgelegt ist zum Bereitstellen seines digitalen Thermostatsignals basierend auf der erfassten Temperatur und dem bereitgestellten Einstellpunkt; und
- die Steuerung (30) ausgelegt ist zum Bestimmen des Tastverhältnisses des PWM-Steuersignals für jede der mehreren thermischen Zonen ohne Abfragen des entsprechenden Thermostats (23a-23c) nach der aktuellen Temperatur oder dem aktuellen Einstellpunkt der entsprechenden thermischen Zone (20a-20c).

14. Steuerungssystem nach Anspruch 12 oder 13, wobei die mehreren Thermostate (23a-23c) Folgendes umfassen:
- zumindest ein erstes Thermostat, das ein digitales Thermostatsignal einer ersten Spannung bereitstellt, und zumindest ein zweites Thermostat, das ein digitales Thermostatsignal einer zweiten Spannung bereitstellt, wobei die zweite Spannung höher als die erste Spannung ist; und/oder
- zumindest ein Bimetall- oder Membran-Thermostat (23a) und zumindest ein Ein/Aus-Thermostat (23b, 23c), wobei das zumindest eine Bimetall- oder Membran-Thermostat (23a) gezielt in einem pulsierenden Modus oder einem nicht-pulsierenden Modus arbeitet, und wobei das zumindest eine Ein/Aus-Thermostat (23b, 23c) nur im nicht-pulsierenden Modus arbeitet.

## Revendications

1. Procédé de régulation d'un système de chauffage hydronique (10) comprenant une pluralité de zones thermiques (20a-20c), en particulier d'un système de chauffage par le sol pour une pluralité de pièces d'un bâtiment, le procédé comprenant :
- la surveillance d'une pluralité de signaux de thermostat numériques pour obtenir un minutage d'appels de chaleur indiquant une demande de chauffage dans une zone thermique (20a-20c) correspondante ;
- la détermination de rapports cycliques respectifs pour un signal de régulation à modulation de largeur d'impulsion, PWM, pour chacune de la pluralité de zones thermiques (20a-20c) sur la base du minutage d'appels de chaleur obtenu ; et
- la régulation d'une température de chaque zone thermique par activation ou désactivation d'un écoulement de milieu chauffant liquide vers chacune des zones thermiques (20a-20c) respectives sur la base du rapport cyclique déterminé du signal de régulation PWM respectif ; le procédé étant **caractérisé par**
- le stockage de minutages d'une pluralité d'appels de chaleur et d'intervalles entre des appels de chaleur pour chaque zone thermique (20a-20c) ;
- le calcul d'une durée moyenne d'appel de chaleur et d'un intervalle moyen entre des appels de chaleur pour chaque zone thermique (20a-20c) ; et
- la détermination du rapport cyclique respectif pour la zone thermique (20a-20c) respective sur la base de la durée moyenne d'appel de chaleur et de l'intervalle moyen.

2. Procédé selon la revendication 1, dans lequel le rapport cyclique du signal de régulation PWM respectif est déterminé sur la base d'une proportion entre une première durée d'au moins un appel de chaleur et une deuxième durée d'au moins un intervalle entre des appels de chaleur respectifs.

3. Procédé selon la revendication 2, dans lequel la durée moyenne d'appel de chaleur et l'intervalle moyen sont calculés sur la base d'un sous-ensemble préfiltré des minutages de la pluralité d'appels de chaleur et d'intervalles, à l'exclusion du plus long et/ou du plus court des appels de chaleur et/ou des intervalles.

4. Procédé selon l'une quelconque des revendications 1 à 3, comprenant :
- la détection d'un mode de fonctionnement pulsatoire d'un thermostat, dans le cas où une longueur d'impulsion détectée d'un signal de thermostat fourni par le thermostat est inférieure à une valeur seuil de minutage en mode d'impulsion prédéterminée ; et/ou
- la détection d'un mode de fonctionnement non pulsatoire ou tout ou rien d'un thermostat, dans le cas où la longueur d'impulsion détectée du signal de thermostat est supérieure à la valeur seuil de minutage en mode d'impulsion prédéterminée.

5. Procédé selon la revendication 4, comprenant en outre :
- la détermination d'une fréquence d'impulsion et/ou d'une durée d'impulsion et/ou d'un intervalle entre plusieurs impulsions d'un signal de thermostat numérique d'un thermostat détecté comme fonctionnant en mode pulsatoire ; et
- sur la base de la fréquence d'impulsion et/ou de la durée d'impulsion et/ou de l'intervalle détectés, la génération d'un signal d'appel de chaleur pour le thermostat respectif, indiquant sélectivement une demande de chaleur dans la zone thermique respective.

6. Procédé selon l'une quelconque des revendications 1 **à 5,** comprenant :
- l'initialisation du rapport cyclique du signal de régulation PWM pour chaque zone thermique (20a-20c) avec une valeur prédéterminée, en particulier un rapport cyclique de 50 % ;
- l'augmentation du rapport cyclique du signal de régulation PWM pour une zone thermique (20a-20c) dans le cas où une durée d'au moins un appel de chaleur de la zone thermique (20a-20c) respective dépasse une première valeur seuil ; et
- la diminution du rapport cyclique du signal de régulation PWM pour une zone thermique (20a-20c) dans le cas où une durée de l'au moins un appel de chaleur de la zone thermique (20a-20c) respective ne dépasse pas une deuxième valeur seuil.

7. Procédé selon l'une quelconque des revendications 1 à 6, comprenant :
- la prolongation d'un écoulement de milieu chauffant liquide vers une seule zone thermique (20c) jusqu'à une durée prédéterminée, dans le cas où l'écoulement de milieu chauffant liquide vers toutes les autres zones thermiques (20a, 20b) a été désactivé.

8. Procédé selon l'une quelconque des revendications 1 à 7, comprenant :
- le calcul d'une durée moyenne d'appels de chaleur pour chaque zone thermique (20a-20c) sur la base d'un nombre prédéterminé d'appels de chaleur ;
- le calcul d'un intervalle moyen entre des appels de chaleur successifs pour chaque zone thermique (20a-20c) sur la base d'un nombre prédéterminé d'intervalles ; et
- le calcul d'une base de temps pour chaque zone thermique (20a-20c) sur la base de la durée moyenne et de l'intervalle moyen respectifs.

9. Procédé selon la revendication 8, comprenant :
- l'augmentation du rapport cyclique du signal de régulation PWM pour la zone thermique (20a-20c) respective d'une première quantité prédéterminée si l'appel de chaleur le plus récent pour une zone de chauffage (20a-20c) dépasse un premier pourcentage prédéterminé de la base de temps ; et/ou
- la diminution du rapport cyclique du signal de régulation PWM pour la zone thermique (20a-20c) respective d'une deuxième quantité prédéterminée si l'appel de chaleur le plus récent pour une zone de chauffage (20a-20c) ne dépasse pas un deuxième pourcentage prédéterminé de la base de temps.

10. Procédé selon la revendication 9, dans lequel le rapport cyclique du signal de régulation PWM pour la zone thermique (20a-20c) respective est diminué de la deuxième quantité prédéterminée uniquement après détection qu'un nombre prédéterminé, en particulier deux, d'appels de chaleur successifs pour la zone thermique (20a-20c) respective ne dépasse pas le deuxième pourcentage prédéterminé de la base de temps.

11. Procédé selon l'une quelconque des revendications 9 ou 10, comprenant :
- l'augmentation du rapport cyclique du signal de régulation PWM pour la zone thermique respective d'une troisième quantité prédéterminée si un appel de chaleur en cours pour une zone de chauffage dépasse un troisième pourcentage prédéterminé de la base de temps.

12. Système de régulation d'un système de chauffage hydronique (10), en particulier d'un système de chauffage par le sol, comprenant :
- une pluralité de thermostats (23a-23c), chaque thermostat étant monté dans l'une d'une pluralité de zones thermiques (20a-20c) et configuré pour fournir un signal de thermostat numérique indiquant la présence ou l'absence d'un appel de chaleur pour la zone thermique (20a-20c) respective ;
- une pluralité d'actionneurs (22a-22c) configurés pour permettre ou couper un écoulement d'un milieu chauffant liquide vers une zone thermique respective de la pluralité de zones thermiques (20a-20c) ; et
- un régulateur (30) configuré pour réaliser un procédé selon l'une quelconque des revendications 1 à 12.

13. Système de régulation selon la revendication 12, dans lequel :
- chaque thermostat (23a-23c) comprenant un capteur de température pour capter une température de la zone thermique (20a-20c) respective et un élément de régulation pour fournir un point de consigne associé à la zone thermique (20a-20c) respective ;
- chaque thermostat est configuré pour fournir son signal de thermostat numérique sur la base de la température captée et du point de consigne fourni ; et
- le régulateur (30) est configuré pour déterminer le rapport cyclique du signal de régulation PWM pour chacune de la pluralité de zones thermiques sans avoir à interroger le thermostat (23a-23c) respectif pour obtenir la température actuelle ou le point de consigne actuel de la zone thermique (20a-20c) respectif.

14. Système de régulation selon la revendication 12 ou 13, dans lequel la pluralité de thermostats (23a-23c) comprennent :
- au moins un premier thermostat fournissant un signal de thermostat numérique d'une première tension et au moins un deuxième thermostat fournissant un signal de thermostat numérique d'une deuxième tension, la deuxième tension étant plus élevée que la première tension ; et/ou
- au moins un thermostat à bilame ou à membrane (23a) et au moins un thermostat tout ou rien (23b, 23c), l'au moins un thermostat à bilame ou à membrane (23a) fonctionnant sélectivement dans un mode pulsatoire ou dans un mode non pulsatoire, et l'au moins un thermostat tout ou rien (23b, 23c) fonctionnant uniquement dans le mode non pulsatoire.
